# FASCICULE DE BREVET EUROPEEN

(11) **EP 4 347 401 B1**
(45) Date de publication et mention de la délivrance du brevet: **03.09.2025**
(21) Numéro de dépôt: 22730959.8
(22) Date de dépôt: 17.05.2022
(51) Int. Cl.: B64D 27/40, B64D 27/12, B64D 27/18

(54) **STRUCTURE DE LIAISON ET DE SUPPORT D'UNE TURBOMACHINE A UN PYLONE D'AERONEF**
STRUKTUR ZUR VERBINDUNG UND BEFESTIGUNG EINER TURBOMASCHINE AN EINEM FLUGZEUGPYLON
CONNECTION AND SUPPORT STRUCTURE OF A TURBOMACHINE TO AN AIRCRAFT PYLON

(30) Priorité: 27.05.2021 FR 2105534
(43) Date de publication de la demande: 10.04.2024
(73) Titulaire: SAFRAN AIRCRAFT ENGINES, 75015 Paris (FR)
(72) Inventeur: GLEMAREC, Guillaume, 77550 Moissy-Cramayel (FR); BEUTIN, Bruno Albert, 77550 Moissy-Cramayel (FR); CAPASSO, Valerio, 77550 Moissy-Cramayel (FR); VIGNES, Jean-Baptiste Manuel Nicolas, 77550 Moissy-Cramayel (FR)
(74) Mandataire: Gevers & Orès
(86) Numéro de dépôt international: PCT/FR2022/050931
(87) Numéro de publication internationale: WO 2022/248791

(56) Documents cités:
- EP-A1- 1 493 663
- EP-A1- 3 757 012
- WO-A1-2020/074811
- US-A- 5 452 575
- US-A1- 2008 156 930
- US-A1- 2009 134 271
- US-B1- 6 474 597
- US-B2- 7 232 091
- US-B2- 7 322 790
- US-B2- 9 394 057
- KIM SUN ET AL: "Variable Guide Vane Scheduling Method Based on the Kinematic Model and Dual Schedule Curves", APPLIED SCIENCES, vol. 10, no. 19, 23 September 2020 (2020-09-23), pages 6643, XP055953550, DOI: 10.3390/app10196643

## Description

### Domaine technique de l'invention

La présente invention concerne une structure de liaison et de support d'une turbomachine à un pylône d'aéronef.

### Arrière-plan technique

L'état de la technique comprend notamment les documents FR-A1-2 892 706, FR-A1-2 969 700, FR-A1-2 987 347, FR-A1-2 987 401, FR-A1-3 015 434, FR-A1-3 058 127, US-B1-6,474,597, US-B2-7,232, 091, US-A-5,452,575 et US-A1-2008/156930. Le document US-B1-6,474,597 divulgue une structure de liaison et de support d'une turbomachine, avec une première portion axiale de fixation au pylône, qui est prise en sandwich entre le pylône et un support principal. Des bielles de suspension servent à sécuriser la turbomachine en cas de défaillance de la structure de liaison principale. Les bielles de suspension sont fixées à la première portion axiale par des pattes transversales qui font partie d'une extrémité supérieure de la première portion axiale.

Une turbomachine d'aéronef comprend un générateur de gaz qui comporte classiquement, d'amont en aval, par référence à l'écoulement des gaz dans la turbomachine, au moins un compresseur, une chambre annulaire de combustion et au moins une turbine. Dans le cas d'un turboréacteur à double corps, respectivement basse pression et haute pression, le générateur de gaz comporte successivement un compresseur basse pression, un compresseur haute pression, la chambre de combustion, la turbine haute pression et la turbine basse pression. Le générateur de gaz définit une veine annulaire d'écoulement d'un flux de gaz, appelé flux primaire, qui traverse les compresseurs, la chambre de combustion et les turbines.

Le rotor du compresseur haute pression est relié au rotor de la turbine haute pression par un arbre haute pression. Le rotor du compresseur basse pression et relié au rotor de la turbine basse pression par un arbre basse pression qui traverse l'arbre haute pression et qui entraîne en rotation une hélice de propulsion située en général à l'amont du générateur de gaz.

Lorsque cette hélice est carénée et donc entourée par un carter annulaire, cette hélice est appelée soufflante et génère un flux d'air qui s'écoule autour du générateur de gaz et est appelé flux secondaire. Lorsque l'hélice n'est pas carénée, elle génère également un flux d'air qui s'écoule autour du générateur de gaz.

La turbomachine est fixée à un élément de l'aéronef, tel qu'une voilure ou le fuselage, par l'intermédiaire d'un pylône d'accrochage aussi appelé mât. Ce pylône a en général une forme générale allongée et comprend une poutre qui s'étend parallèlement à l'axe longitudinal de la turbomachine. Dans le cas où la turbomachine est fixée sous une voilure de l'aéronef, le pylône est situé à 12h (12 heures) par analogie avec le cadran d'une horloge.

Dans la technique actuelle, le pylône comprend des organes amont de fixation et de suspension de la turbomachine qui sont dédiés à un type de turbomachine et qui ne peuvent pas être utilisés pour un autre type de turbomachine. Ces organes de fixation sont par exemple destinés à être fixés sur un carter de soufflante d'une turbomachine, qui entoure l'hélice de soufflante, et qui ne peuvent donc pas être utilisés pour une turbomachine à hélice non carénée car cette turbomachine ne comporte pas de carter de soufflante.

Par ailleurs, le pylône de fixation peut comprendre des organes aval de fixation et de suspension de l'extrémité aval d'une turbomachine. Cette configuration entraîne cependant des inconvénients. En effet, en fonctionnement, le générateur de gaz assure une transmission des efforts entre les points de fixation amont et aval au pylône, qui se traduisent par des déformations du générateur et de gaz et par des modifications des jeux entre les rotors et les stators du générateur de gaz. Le générateur de gaz est ainsi soumis à un moment généré par les efforts axiaux (poussée et reprise de poussée désaxées). La turbomachine est en outre soumise à un moment généré par la dissymétrie d'efforts axiaux sur les aubes de l'hélice de soufflante, et à des efforts provenant de la captation d'air (efforts de manche) par la turbomachine. On comprend donc que les performances et l'opérabilité de la turbomachine peuvent être affectées par ces efforts.

Une solution à ce problème consisterait à fixer en porte-à-faux la turbomachine au pylône. Cela reviendrait donc à suspendre une partie avant ou amont de la turbomachine au pylône et à laisser libre la partie arrière ou aval de la turbomachine, telle que son carter de turbine par exemple.

Une autre problématique est lié au hissage de la turbomachine depuis une station de stockage posé au sol jusqu'au pylône auquel la turbomachine est destinée à être fixée. Le hissage d'une turbomachine peut nécessiter des déplacements selon plusieurs directions jusqu'à ce que la turbomachine accoste le pylône et puisse être fixée au pylône.

La présente invention propose un perfectionnement aux technologies actuelles, qui permet de résoudre au moins une partie des problèmes et inconvénients évoqués ci-dessus.

### Résumé de l'invention

L'invention concerne une structure de liaison et de support d'une turbomachine à un pylône d'aéronef, la structure ayant une forme générale allongée et ayant un premier axe d'allongement destiné à s'étendre parallèlement à un second axe d'allongement du pylône, la structure comportant :
- une première portion axiale de fixation au pylône, cette première portion comportant une extrémité supérieure qui définit un plan sensiblement horizontal d'interface avec le pylône, et une extrémité inférieure portant des bielles de suspension qui sont destinées à être reliées à la turbomachine et qui s'étendent dans un premier plan sensiblement vertical, appelé plan arrière, et
- une seconde portion axiale destinée à s'étendre en avant du pylône et comprenant au moins un organe de suspension qui est destiné à être relié à la turbomachine et qui s'étend dans un second plan sensiblement vertical, appelé plan avant, ce plan avant étant à distance axiale du plan arrière.

La structure de liaison selon l'invention présente un double avantage. Le premier avantage est qu'elle permet de suspendre la turbomachine dans deux plans, respectivement avant et arrière. Autrement dit, les suspensions avant et arrière de la turbomachine sont rapprochées et intégrées au sein de la structure, ce qui permet d'avoir une structure unique de suspension de la turbomachine. La structure est de préférence reliée à une partie amont de la turbomachine, telle qu'un carter intermédiaire. La turbomachine est alors destinée à être montée en porte-à-faux sur le pylône puisqu'elle ne comprend pas de partie aval, telle qu'un carter de turbine, destinée à être reliée au pylône.

Un second avantage de l'invention est lié au hissage de la turbomachine qui est facilité grâce à la structure de liaison. Cette structure de liaison comprend un plan d'interface horizontal qui définit une zone d'accostage du pylône. Lors du hissage de la turbomachine, celle-ci peut simplement être déplacée dans une direction verticale unique du bas vers le haut, jusqu'à ce que la structure soit en appui sur le pylône dans ce plan. La structure est alors fixée au pylône. Par ailleurs, la seconde portion est avantageusement reliée directement au pied de l'aube pour faciliter l'intégration de la structure de liaison dans la turbomachine.

La structure selon l'invention peut comprendre une ou plusieurs des caractéristiques suivantes, prises isolément les unes des autres ou en combinaison les unes avec les autres :
- ledit au moins un organe de suspension est situé à une extrémité avant libre de la seconde portion ;
- ledit au moins un organe de suspension est un groin qui comprend :
   - une bielle de fixation à la turbomachine, qui s'étend dans ledit plan avant, et
   - un corps cylindrique qui est engagée dans un logement de l'extrémité libre de la seconde portion et qui est apte à pivoter dans ce logement autour d'un axe parallèle audit premier axe d'allongement ;
- la première portion porte trois bielles de suspension dans ledit plan arrière, ces trois bielles comportant :
   - deux bielles latérales s'étendant respectivement d'un côté et de l'autre de la première portion, de manière symétrique par rapport à un plan médian vertical passant par ledit premier axe d'allongement, et
   - une bielle centrale située sous la première portion ;
- la première portion a une longueur L1 mesurée le long du premier axe d'allongement, qui est inférieure ou égale à une longueur L2 de la seconde portion mesurée le long de cet axe ; en variante, L1 est supérieure ou égale à L2 ;
- la seconde portion comprend une plateforme supérieure de fixation d'au moins un pied d'une aube de redresseur ;
   -- la seconde portion porte une ébauche de pied d'une aube de redresseur ;
   -- la ou chaque aube de redresseur est une aube fixe ou une aube à calage variable ;
- la seconde portion porte une ébauche de pied configurée pour être au pied d'une aube de redresseur ;
- l'aube de redresseur étant à calage variable, la structure comprend un mécanisme de guidage du pied de l'aube et/ou un système d'actionnement ;
- ledit plan avant est situé en amont ou au droit de bords d'attaque des aubes, et le plan arrière est situé en aval des bords de fuite des aubes.

La présente invention concerne encore un ensemble comportant une turbomachine d'aéronef et une structure de liaison telle que décrite ci-dessus, la turbomachine étant configurée pour être montée en porte-à-faux sur un pylône grâce à cette structure de liaison.

L'ensemble selon l'invention peut comprendre une ou plusieurs des caractéristiques suivantes, prises isolément les unes des autres ou en combinaison les unes avec les autres :
- ladite structure a une forme générale allongée,
- la turbomachine a un axe longitudinal et comporte un générateur de gaz comprenant d'amont en aval, dans le sens d'écoulement des gaz, au moins un compresseur, une chambre annulaire de combustion et au moins une turbine, le générateur de gaz définissant une veine annulaire principale d'écoulement d'un premier flux d'air, et le générateur de gaz étant destiné à être entouré par une veine annulaire secondaire d'écoulement d'un second flux d'air, le générateur de gaz entraînant une hélice située en amont des veines principale et secondaire, la structure de liaison étant fixée au générateur de gaz, en aval de l'hélice, de sorte que son axe d'allongement soit situé à un rayon mesuré par rapport à l'axe longitudinal, qui soit compris entre le rayon minimal et le rayon maximal de l'hélice ;
- ladite turbomachine est du type caréné ou non caréné,
- ladite veine secondaire est carénée ou non carénée ;
- ladite hélice est située en amont des veines principale et secondaire ; en variante, l'hélice est située en aval de ces veines ;
- la structure de liaison est fixée au générateur de gaz en aval de l'hélice ; en variante, la structure de liaison est fixée au générateur de gaz en amont de l'hélice ;
- la turbomachine comprend une rangée annulaire d'aubes de redresseur qui est située en aval de l'hélice dans la veine secondaire, la seconde portion de la structure étant située entre deux aubes adjacentes de cette rangée d'aubes ou portant l'une des aubes de cette rangée d'aubes ;
- les aubes de redresseur sont des aubes fixes ou des aubes à calage variable ;
- les aubes de redresseur sont situées en aval de l'hélice dans la veine secondaire ;
- ledit plan avant est situé en amont ou au droit de bords d'attaque des aubes de la rangée d'aubes, et/ou ledit plan arrière est situé en aval de bords de fuite des aubes de la rangée d'aubes ;
- l'ensemble comprend en outre un pylône ayant un second axe d'allongement et comportant une extrémité avant de fixation à la première portion de la structure ;
- l'ensemble comprend en outre des barres de reprise de poussée, ces barres comportant des extrémités avant fixées au générateur de gaz et des extrémités arrière reliées à un palonnier fixé au pylône, en arrière de la structure.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue très schématique d'un ensemble comportant une turbomachine d'aéronef et son pylône d'accrochage, selon la technique antérieure à l'invention ;
[Fig.2] la figure 2 est une vue très schématique d'une turbomachine d'aéronef et montre des points de fixation et de suspension à un pylône d'accrochage, selon la technique antérieure à l'invention ;
[Fig.3] la figure 3 est une vue très schématique d'une autre turbomachine d'aéronef et montre des points de fixation et de suspension à un pylône d'accrochage, selon la technique antérieure à l'invention ;
[Fig.4] la figure 4 est une vue schématique en perspective d'un ensemble comportant une turbomachine d'aéronef, un pylône d'accrochage, et une structure de liaison de la turbomachine au pylône, selon un mode préféré de réalisation de l'invention ;
[Fig.5] la figure 5 est une vue schématique de côté du pylône et de la structure de liaison de la figure 4 ;
[Fig.6] la figure 6 est une vue schématique en perspective d'un organe de suspension avant de la structure de liaison de la figure 4 ;
[Fig.7] la figure 7 est autre une vue schématique en perspective de l'organe de suspension avant de la structure de liaison de la figure 4 ;
[Fig.8] la figure 8 est une vue schématique en perspective de bielles de suspension arrière de la structure de liaison de la figure 4 ;
[Fig.9] la figure 9 est une vue schématique de face d'une partie de la turbomachine et de la structure de liaison de la figure 4 ;
[Fig.10] la figure 10 est une vue schématique de dessus d'une partie de la turbomachine et de la structure de liaison de la figure 4 ;
[Fig.11] la figure 11 est une vue similaire à celle de la figure 9 et représentant une variante de réalisation de l'invention ;
[Fig.12] la figure 12 est une vue similaire à celle de la figure 10 et représentant la même variante de réalisation de l'invention ;
[Fig.13] la figure 13 est une vue schématique de côté de la structure de liaison de la figure 4 lors d'une étape de hissage vers le pylône ; et
[Fig.14] la figure 14 est une vue schématique en perspective et de face de la structure de liaison et du pylône de la figure 4, et illustrent les moments qui s'appliquent en fonctionnement aux points de liaison de la structure à la turbomachine.

### Description détaillée de l'invention

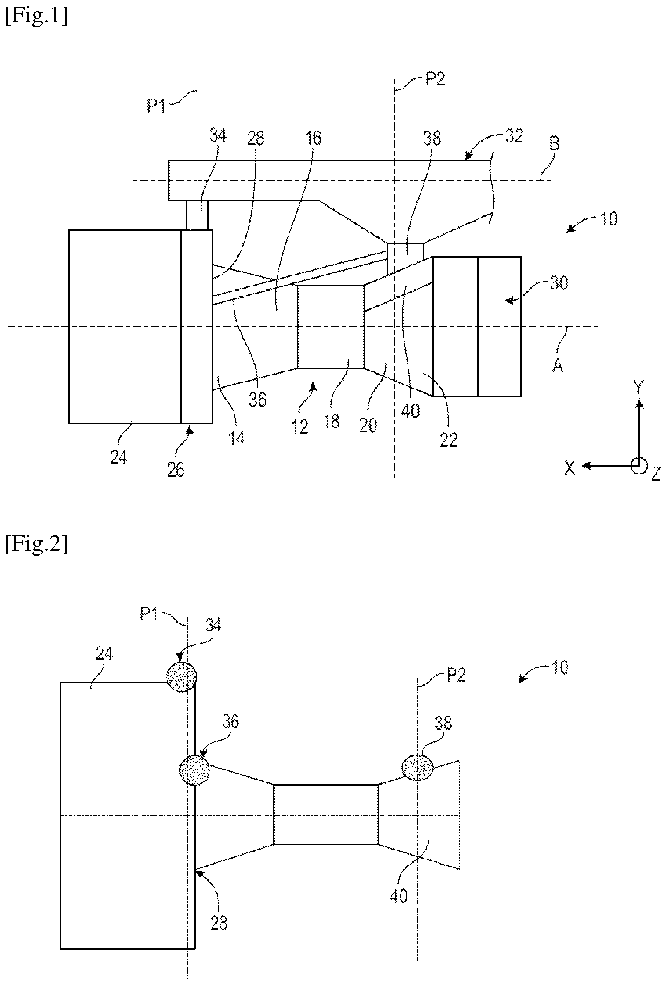

La figure 1 montre une turbomachine 10 pour un aéronef, cette turbomachine 10 étant ici un turboréacteur à double flux et double corps.

L'axe A désigne l'axe longitudinal de la turbomachine. Le repère orthonormé XYZ est représenté dans certaines figures dont la figure 1. La direction X est parallèle à l'axe X et orientée vers l'amont ou l'avant de la turbomachine 10, l'axe Y est orienté vers le haut, et l'axe Z est orienté vers un côté.

La turbomachine 10 comprend un générateur de gaz 12 qui comporte d'amont en aval par référence à l'écoulement des gaz le long de l'axe A, un compresseur BP 14 ou basse pression, un compresseur HP 16 ou haute pression, une chambre annulaire de combustion 18, une turbine HP 20 ou haute pression et une turbine BP 22 ou basse pression.

Bien que cela ne soit pas visible dans la figure 1, le rotor du compresseur HP 16 est relié au rotor de la turbine HP 20 par un arbre haute pression, et le rotor du compresseur BP 14 et relié au rotor de la turbine BP 22 par un arbre basse pression qui traverse l'arbre haute pression et qui entraîne en rotation une hélice de propulsion située à l'amont du générateur de gaz 12 et qui est entourée par un carter annulaire appelé carter de soufflante 24.

Le carter de soufflante 24 est relié au générateur de gaz 12 par un carter intermédiaire 26 qui comprend un moyeu central 28 et une série de bras radiaux de liaison du moyeu 28 au carter de soufflante 24.

Le générateur de gaz 12 définit une veine annulaire principale d'écoulement d'un premier flux d'air, appelé flux primaire. Le générateur de gaz 12 est entouré par une veine annulaire secondaire d'écoulement d'un second flux d'air, appelé flux secondaire.

Le flux d'air entrant dans la soufflante se divise en une partie formant le flux primaire. L'air de ce flux primaire est comprimé dans les compresseurs BP 14 et HP 16, puis mélangé à du carburant et brûlé dans la chambre de combustion 18. Les gaz de combustion du flux primaire sont ensuite détendus dans les turbines HP 20 et BP 22 et s'écoulent enfin dans une tuyère d'échappement 30.

L'autre partie du flux d'air entrant dans la soufflante forme le flux secondaire qui s'écoule autour du générateur de gaz 12 et qui est destiné à être mélange au flux primaire en aval de la tuyère 30.

La turbomachine 10 est fixé à un élément de l'aéronef par l'intermédiaire d'un pylône 32 qui a une forme générale allongée le long de l'axe A et comprend donc un axe d'allongement B parallèle à l'axe A. Le pylône 32 comporte des organes 34, 38 de fixation et de suspension de la turbomachine 10.

Les figures 1 à 3 illustrent l'état de la technique antérieur à la présente invention.

Dans le premier cas illustré aux figures 1 et 2, il y a trois points ou zones de fixation du pylône 32 à la turbomachine 10. Deux des points sont situés dans un plan amont ou avant P1 perpendiculaire à l'axe A et le dernier point est situé dans un plan aval ou arrière P2 perpendiculaire à l'axe A.

Au niveau du plan P1, un premier organe de fixation 34 assure la liaison du pylône 32 au carter de soufflante 24. Au niveau du plan P2, l'organe de fixation 38 assure la fixation du pylône 32 à un carter de turbine ou d'échappement 40. Cet organe de fixation 38 est en outre relié par des barres de reprise de poussée 36 au moyeu 28 du carter intermédiaire 26. Ces barres 36 assurent la transmission de la poussée de la turbomachine 10 au pylône 32 et donc à l'aéronef.

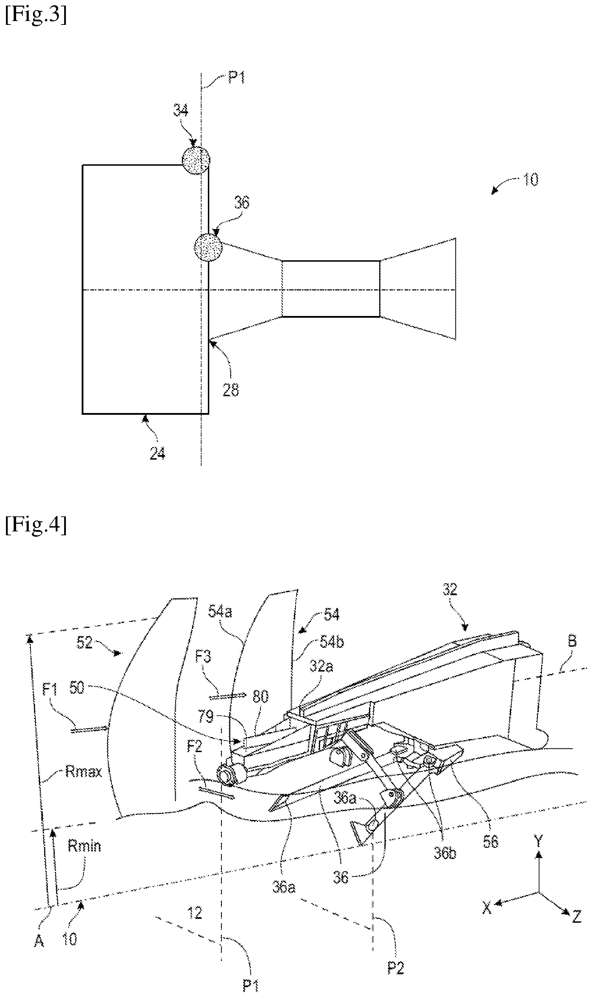

Dans le second cas illustré à la figure 3, il y a seulement les deux points de fixation dans le plan P1 précité, et donc la turbomachine est fixée en porte-à-faux au pylône 32. Dans ce cas, au niveau du plan P1, l'organe de fixation 34 assure la liaison du pylône 32 au carter de soufflante 24, et des bielles de reprise de poussée 36 assurent la liaison du moyeu 28 du carter intermédiaire 26 au pylône 32, par l'intermédiaire d'un organe de fixation (non représenté) qui est fixé au pylône sans être fixé à la turbomachine.

La figure 4 illustre un mode préféré de réalisation de l'invention qui concerne une structure de liaison 50 et de fixation en porte-à-faux d'une turbomachine 10 d'aéronef à un pylône 32.

La turbomachine 10 est illustrée partiellement à la figure 4 et la description qui précède en relation avec la figure 1 peut s'appliquer à la turbomachine 10 de la figure 4 sauf en ce qui concerne la fixation de la turbomachine 10 au pylône 32. Dans cette figure, le carter de soufflante 24 n'est pas représenté car l'invention s'applique à une hélice 52 qui est carénée par un tel carter 24 pour former une soufflante, ou qui au contraire qui n'est pas carénée.

L'hélice 52 comprend des aubes qui s'étendent radialement par rapport à l'axe A de la turbomachine 10. Les aubes de l'hélice 52 s'étendent entre un rayon minimal Rmin mesuré au niveau des pieds de aubes depuis l'axe A, et un rayon maximal Rmax mesuré depuis les sommets des aubes depuis l'axe A. Comme évoqué dans ce qui précède, le flux d'air F1 qui traverse l'hélice 52 est divisé en aval de l'hélice 52 en un flux primaire F2 qui s'écoule dans le générateur de gaz 12, et en un flux secondaire F3 qui s'écoule autour du générateur de gaz 12.

En aval de l'hélice 52, la turbomachine 10 comprend des aubes fixes 54 de redresseur, appelées couramment OGV (acronyme de *Outer Guide Vanes*). Ces aubes 54 s'étendent radialement par rapport à l'axe A depuis une virole du carter intermédiaire 26.

Le pylône 32 a son axe d'allongement B parallèle à l'axe A et son extrémité amont ou avant est située en aval des bords de fuite 54b des aubes 54. Le pylône 32 a son extrémité avant 32a qui est située au niveau ou au-dessus du carter intermédiaire 26.

Une spécificité du montage est liée à la position du pylône 32 par rapport au flux secondaire F3. Contrairement à l'art antérieur de la figure 1 où le pylône 32 s'étend à distance radiale du générateur de gaz 12, le pylône 32 de la figure 4 s'étend au plus près du générateur de gaz 12. L'axe d'allongement B est ainsi situé à un rayon de l'axe A, qui est compris entre Rmin et Rmax.

Comme évoqué dans ce qui précède en relation avec la figure 3, la turbomachine 10 qui est fixée en porte-à-faux au pylône 32 est reliée à ce dernier par des barres de reprises de poussée 36.

Les barres 36, au nombre de deux, sont disposées de manière symétrique par rapport à un plan médian vertical passant par l'axe A. Elles comportent chacune des extrémités avant 36a fixées au générateur de gaz 12, par exemple au niveau du carter intermédiaire 26, et des extrémités arrière 36b reliées à un palonnier 56 fixé au pylône 32, à distance de son extrémité axiale 32a. Les extrémités 36a, 36b des bielles 36 sont de préférence articulées par des liaisons à rotule, respectivement à des chapes solidaires du carter intermédiaire 26, et des chapes solidaires du palonnier 56.

La turbomachine 10 est fixée et suspendue au pylône 32 par l'intermédiaire d'une structure unique de liaison 50 qui définit deux plans, respectivement avant P1 et arrière P2, de suspension de la turbomachine au pylône.

Comme on le constate à la figure 4, la structure de liaison 50 est située au niveau de l'extrémité avant 32a du pylône 32, si bien que le plan arrière de suspension de la turbomachine 10 est rapproché vers l'avant et du plan avant P1, ce qui permet le montage en porte-à-faux de la turbomachine 10.

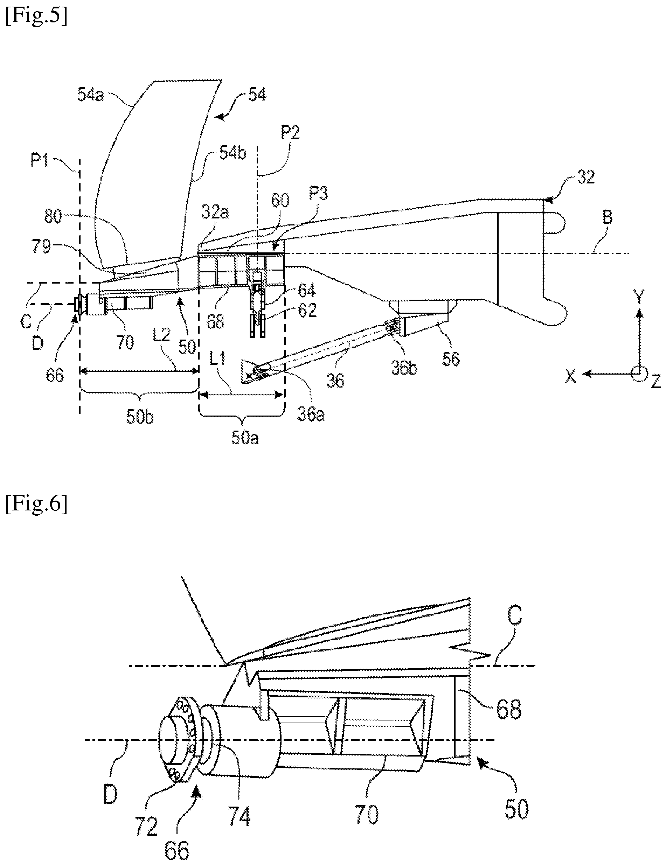

On se réfère désormais aux figures 5 à 8 qui permettent de mieux voir les caractéristiques de la structure de liaison 50.

La structure de liaison 50 a une forme générale allongée et a un axe d'allongement C parallèle aux axes A, B.

La structure 50 comporte pour l'essentiel deux portions axiales, à savoir :
- une première portion axiale 50a de fixation au pylône 32, qui est une portion arrière, et
- une seconde portion axiale 50b destinée à s'étendre en avant du pylône 32 et qui est donc une portion avant.

Bien que cela ne soit pas limitatif, la figure 5 montre que la première portion 50a a une longueur L1 mesurée le long de l'axe C, qui est inférieure ou égale à la longueur L2 de la seconde portion 50b mesurée le long de cet axe.

La première portion 50a comporte une extrémité supérieure 60 qui définit un plan P3 sensiblement horizontal d'interface avec le pylône 32.

Cette première portion 50a comprend en outre une extrémité inférieure portant des bielles de suspension 62, 64 qui sont destinées à être reliées à la turbomachine 10 et qui s'étendent dans le plan arrière P2.

La seconde portion 50b comprend au moins un organe de suspension 66 qui est destiné à être relié à la turbomachine 10 et qui s'étend dans le plan avant, P1.

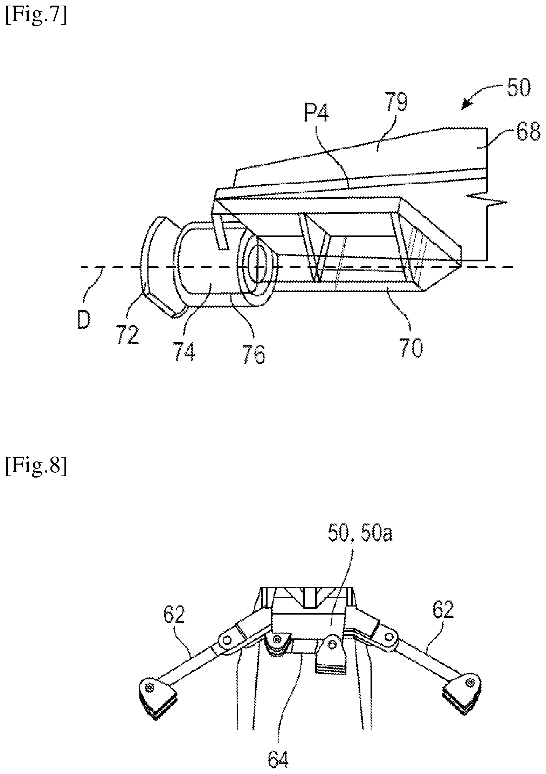

La structure de liaison 50 peut être formée d'une seule pièce ou de plusieurs pièces assemblées. Avantageusement, elle comprend une poutre principale 68 qui forme la première portion 50a et une partie supérieure de la seconde portion 50b. La partie inférieure de la seconde portion 50b est alors formée par une pièce structurale 70 rapportée et fixée sous la poutre 68, comme cela est représenté à la figure 7, mais qui peut être intégrée à cette poutre 68. Le plan d'interface P4 entre la poutre 68 et la pièce 70 peut être sensiblement horizontal.

L'organe de suspension 66 est situé à une extrémité avant libre de la seconde portion 50b et est ici formé par un groin qui comprend :
- une bride 72 de fixation à la turbomachine 10, qui s'étend dans ledit plan avant P1, et
- un corps cylindrique 74 qui est engagé dans un logement 76 de l'extrémité libre de la seconde portion 50b, et en particulier dans la pièce 70. Le corps 74 est apte à pivoter dans ce logement 76 autour d'un axe D parallèle à l'axe d'allongement C. On comprend ainsi que, dans le plan avant P1, la structure de liaison 50 est reliée à la turbomachine 10 par une liaison pivot glissant autorisant des mouvements de rotation autour de l'axe D.

L'organe 66 peut être configuré pour laisser un degré de liberté à la turbomachine 10 le long de l'axe X. Autrement dit, l'organe 66 peut ne pas être configuré pour reprendre les efforts de la turbomachine 10 et les transmettre au pylône 32 dans la direction X. L'organe 66 est donc avantageusement configuré pour reprendre les efforts dans les directions Y et Z.

Dans l'exemple représenté, la structure de liaison 50 comprend trois bielles de suspension 62, 64 dans le plan arrière P2, parmi lesquelles :
- deux bielles latérales 62 s'étendant respectivement d'un côté et de l'autre de la première portion 50a, de manière symétrique par rapport à un plan médian vertical passant par l'axe C, et
- une bielle centrale 64 située sous la première portion 50a.

Les bielles 62, 64 ont leurs extrémités qui sont articulées par des liaisons rotulantes respectivement à des chapes 78 solidaires du générateur de gaz (en particulier au niveau du carter intermédiaire), et à la portion 50a.

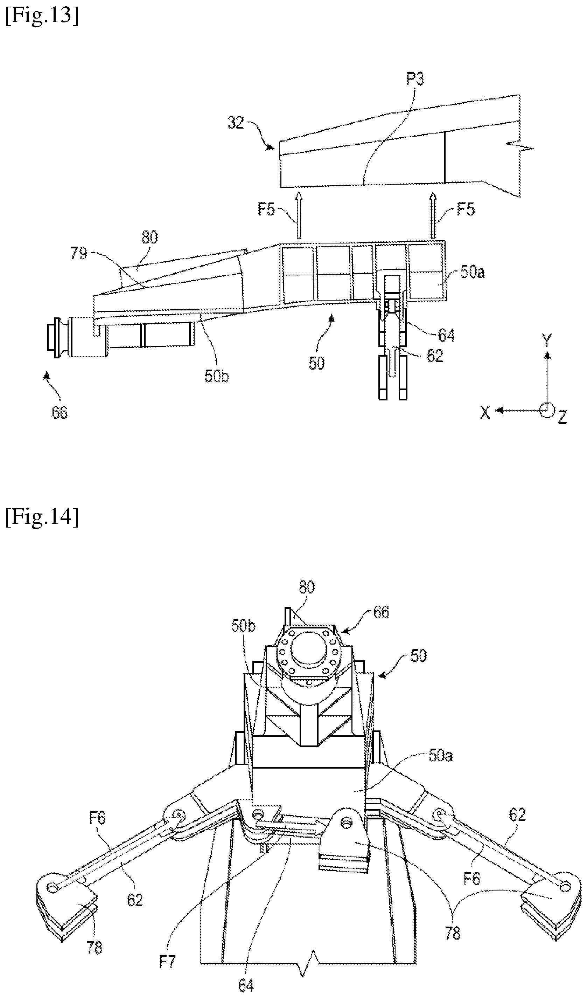

Les bielles 62, 64 sont configurées pour reprendre et transmettre les efforts appliqués à la turbomachine dans les directions Y et Z et les moments suivant la direction X. La figure 14 montre que les efforts dans les directions Y et Z sont repris par les bielles 62 (flèches F6), et que la bielle 64 reprend les moments suivant la direction X (flèche F7).

Les bielles 36 de reprise de poussée reprennent quant à elles les efforts suivant la direction X.

Comme cela est visible à la figure 4 notamment, la structure de liaison 50 s'étend vers l'avant dans le prolongement du pylône 32 et est fixée au générateur de gaz 12, en aval de l'hélice 52, de sorte que son axe d'allongement C soit situé à un rayon mesuré par rapport à l'axe A, qui soit compris entre les rayon Rmin et Rmax.

La portion avant 50b de la structure 50 est située au niveau des aubes fixes 54 et deux configurations sont alors possibles.

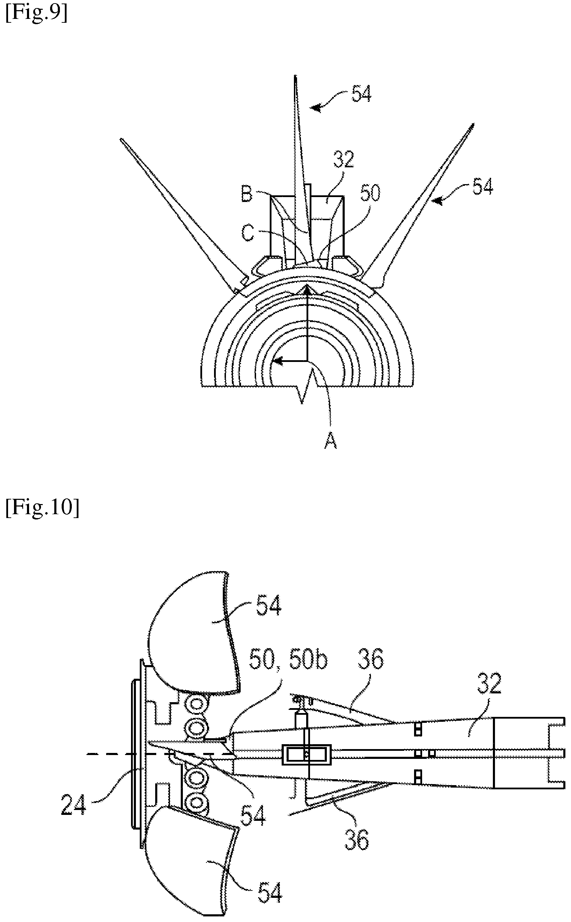

Selon une première configuration illustrée aux figures 5, 9 et 10, la portion avant 50b de la structure 50 porte l'une des aubes 54.

Dans ce cas, la portion avant 50b comprend une plateforme supérieure 79 configurée pour être reliée ou solidarisée à une aube 54, en particulier à celle située à 12h. En pratique, cette plateforme supérieure 79 peut porter une ébauche de pied 80 configurée pour être fixée au pied d'une aube 54.

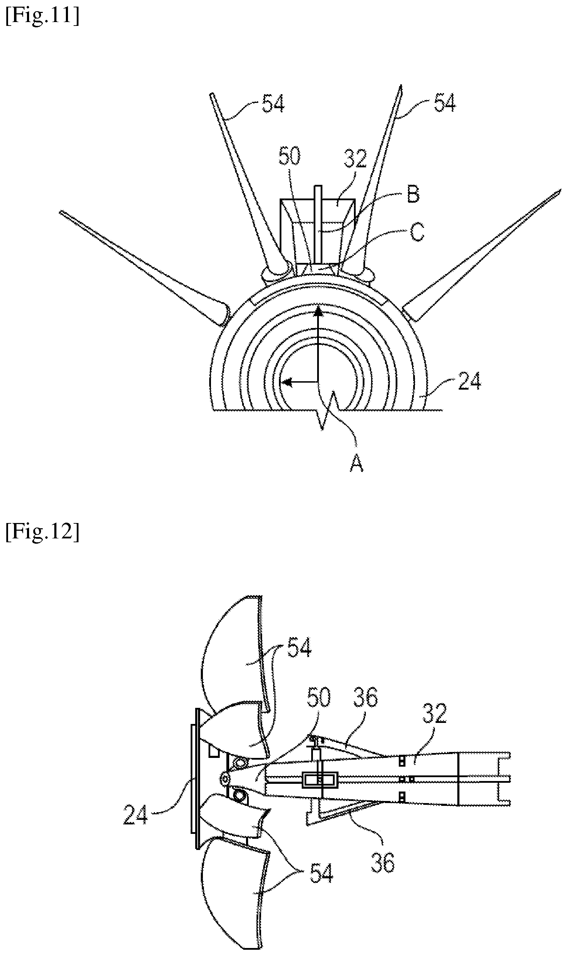

Selon une autre configuration illustrée aux figures 11 et 12, la portion avant 50b de la structure 50 est située entre deux aubes 54 adjacentes.

Dans une variante non représentée, les aubes 54 sont du type à calage variable et sont donc chacune aptes à être positionnées angulairement autour d'un axe radial avec un angle précis. Dans ce cas, la structure 50 peut comprendre un mécanisme de guidage du pied de l'aube 54, tel qu'un roulement, et/ou un système d'actionnement comportant par exemple des bielles, un engrenage, un actionneur, etc.

Dans encore une autre variante non représentée, la structure 50 pourrait supporter deux aubes 54 voire plus.

La figure 5 permet de constater que, dans l'exemple représenté, le plan avant P1 est situé en amont ou au droit des bords d'attaque 54a des aubes 54, et le plan arrière P2 est situé en aval des bords de fuite 54b des aubes 54 et est destiné à passer au niveau du carter intermédiaire de la turbomachine.

La figure 13 illustre une étape et un procédé de hissage d'une turbomachine 10 équipée de la structure de liaison 50 jusqu'au pylône 32.

Bien que la turbomachine ne soit pas représentée dans ce dessin, il faut comprendre que la structure 50 est préalablement fixée à la turbomachine, c'est-à-dire que la bride 72 de son organe 66 est fixée à une bride complémentaire du générateur de gaz 12, en amont ou au droit des bords d'attaque 54a des aubes 54, comme évoqué dans ce qui précède, et les bielles 62, 64 sont fixées au générateur de gaz également. La structure 50 a donc l'avantage de pouvoir être fixée sur la turbomachine dans la ligne d'assemblage de cette dernière. Les bielles de reprise de poussée 36 peuvent également être fixées à la turbomachine 10.

La turbomachine peut être déplacée au sol au moyen d'un chariot ou suspendu et déplacé grâce à un ou plusieurs palans.

La turbomachine est positionnée sous le pylône 32 de sorte que les axes B et C soient parallèles et que la portion 50a de la structure 50 soit située juste au-dessous du pylône 32, comme illustré à la figure 13. La turbomachine est alors hissée vers le pylône 32, par un unique déplacement en translation verticale du bas vers le haut (flèches F5), jusqu'à ce que la portion 50a et le pylône soient en appui dans le plan d'interface P3.

La structure 50 peut alors être fixée au pylône 32, par exemple par des moyens du type vis-écrou ou analogues. Le palonnier 56 fixé aux bielles 36 peut également être fixé au pylône en arrière de la structure 50, comme illustré à la figure 5.

## Revendications

1. Structure (50) de liaison et de support d'une turbomachine (10) à un pylône (32) d'aéronef, la structure (50) ayant un premier axe d'allongement (C) destiné à s'étendre parallèlement à un second axe d'allongement (B) du pylône (32), la structure (50) comportant :
- une première portion axiale (50a) de fixation au pylône (32), cette première portion (50a) comportant une extrémité supérieure qui définit un plan (P3) sensiblement horizontal d'interface avec le pylône (32), et une extrémité inférieure portant des bielles (62, 64) de suspension qui sont destinées à être reliées à la turbomachine (10) et qui s'étendent dans un premier plan sensiblement vertical, appelé plan arrière (P2), et
- une seconde portion axiale (50b) destinée à s'étendre en avant du pylône (32) et comprenant au moins un organe de suspension (66) qui est destiné à être relié à la turbomachine (10) et qui s'étend dans un second plan sensiblement vertical, appelé plan avant (P1), ce plan avant étant à distance axiale du plan arrière (P2).

2. Structure de liaison (50) selon la revendication 1, dans laquelle ledit au moins un organe de suspension (66) est situé à une extrémité avant libre de la seconde portion (50b).

3. Structure de liaison (50) selon la revendication 2, dans laquelle ledit au moins un organe de suspension (66) est un groin qui comprend :
- une bielle (72) de fixation à la turbomachine (10), qui s'étend dans ledit plan avant (P1), et
- un corps cylindrique (74) qui est engagée dans un logement (76) de l'extrémité libre de la seconde portion (50b) et qui est apte à pivoter dans ce logement autour d'un axe (D) parallèle audit premier axe d'allongement (C).

4. Structure de liaison (50) selon l'une des revendications précédentes, dans laquelle la première portion (50a) porte trois bielles de suspension (62, 64) dans ledit plan arrière (P2), ces trois bielles comportant :
- deux bielles latérales (62) s'étendant respectivement d'un côté et de l'autre de la première portion (50a), de manière symétrique par rapport à un plan médian vertical passant par ledit premier axe d'allongement (C), et
- une bielle centrale (64) située sous la première portion (50a).

5. Structure de liaison (50) selon l'une des revendications précédentes, dans laquelle la seconde portion (50b) comprend une plateforme supérieure (79) de fixation d'au moins un pied d'une aube (54) de redresseur.

6. Structure de liaison (50) selon l'une des revendications précédentes, dans laquelle, l'aube (54) de redresseur étant à calage variable, la structure (50) comprend un mécanisme de guidage du pied de l'aube (54) et/ou un système d'actionnement.

7. Structure de liaison (50) selon l'une des revendications précédentes, dans laquelle ledit plan avant (P1) est situé en amont ou au droit de bords d'attaque (54a) des aubes (54), et le plan arrière (P2) est situé en aval des bords de fuite (54b) des aubes (54).

8. Ensemble comportant une turbomachine (10) d'aéronef et une structure de liaison (50) selon l'une des revendications précédentes, la turbomachine (10) étant configurée pour être montée en porte-à-faux sur un pylône (32) grâce à cette structure de liaison (50).

9. Ensemble selon la revendication précédente, dans lequel la turbomachine (10) a un axe longitudinal (A) et comporte un générateur de gaz (12) comprenant d'amont en aval, dans le sens d'écoulement des gaz, au moins un compresseur (14, 16), une chambre annulaire de combustion (18) et au moins une turbine (20, 22), le générateur de gaz définissant une veine annulaire principale d'écoulement d'un premier flux d'air, et le générateur de gaz (12) étant destiné à être entouré par une veine annulaire secondaire d'écoulement d'un second flux d'air, le générateur de gaz (12) entraînant une hélice (52) et la structure de liaison (50) étant fixée au générateur de gaz (12) de sorte que son axe d'allongement (C) soit situé à un rayon mesuré par rapport à l'axe longitudinal, qui soit compris entre le rayon minimal (Rmin) et le rayon maximal (Rmax) de l'hélice (52).

10. Ensemble selon la revendication 8 ou 9, dans lequel la turbomachine (10) comprend une rangée annulaire d'aubes (54) de redresseur qui est située dans la veine secondaire, la seconde portion (50b) de la structure (50) étant située entre deux aubes (54) adjacentes de cette rangée d'aubes ou portant l'une des aubes (54) de cette rangée d'aubes.

11. Ensemble selon la revendication précédente, dans lequel ledit plan avant (P1) est situé en amont ou au droit de bords d'attaque (54a) des aubes (54) de la rangée d'aubes, et/ou ledit plan arrière (P2) est situé en aval de bords de fuite (54b) des aubes (54) de la rangée d'aubes.

12. Ensemble selon l'une des revendications 8 à 10, dans lequel il comprend en outre un pylône (32) ayant un second axe d'allongement (B) et comportant une extrémité avant (32a) de fixation à la première portion (50a) de la structure (50).

## Patentansprüche

1. Struktur (50) zur Verbindung und Stützung eines Turbotriebwerks (10) an einem Pylon (32) eines Flugzeugs, wobei die Struktur (50) eine erste Verlängerungsachse (C) aufweist, die dazu vorgesehen ist, sich parallel zu einer zweiten Verlängerungsachse (B) des Pylons (32) zu erstrecken, wobei die Struktur (50) Folgendes umfasst:
- einen ersten axialen Abschnitt (50a) zur Befestigung am Pylon (32), wobei dieser erste Abschnitt (50a) ein oberes Ende umfasst, das eine im Wesentlichen horizontale Grenzflächenebene (P3) mit dem Pylon (32) definiert, und ein unteres Ende, das Pleuel (62, 64) zur Aufhängung trägt, die dazu vorgesehen sind, mit dem Turbotriebwerk (10) verbunden zu werden und die sich in einer ersten im Wesentlichen vertikalen Ebene, als hintere Ebene (P2) bezeichnet, erstrecken, und
- einen zweiten axialen Abschnitt (50b), der dazu vorgesehen ist, sich vor dem Pylon (32) zu erstrecken und mindestens ein Aufhängungsorgan (66) umfasst, das dazu vorgesehen ist, mit dem Turbotriebwerk (10) verbunden zu werden und das sich in einer zweiten im Wesentlichen vertikalen Ebene, als vordere Ebene (P1) bezeichnet, erstreckt, wobei diese vordere Ebene axial von der hinteren Ebene (P2) beabstandet ist.

2. Verbindungsstruktur (50) nach Anspruch 1, wobei sich das mindestens eine Aufhängungsorgan (66) an einem freien Vorderende des zweiten Abschnitts (50b) befindet.

3. Verbindungsstruktur (50) nach Anspruch 2, wobei das mindestens eine Aufhängungsorgan (66) ein Vorsprung ist, der Folgendes umfasst:
ein Pleuel (72) zur Befestigung am Turbotriebwerk (10), das sich in der vorderen Ebene (P1) erstreckt, und
einen zylinderförmigen Körper (74), der in eine Aufnahme (76) des freien Endes des zweiten Abschnitts (50b) eingreift und der dazu angepasst ist, in dieser Aufnahme um eine zur ersten Verlängerungsachse (C) parallele Achse (D) zu schwenken.

4. Verbindungsstruktur (50) nach einem der vorstehenden Ansprüche, wobei der erste Abschnitt (50a) drei Pleuel zur Aufhängung (62, 64) in der hinteren Ebene (P2) trägt, wobei diese drei Pleuel Folgendes umfassen:
- zwei seitliche Pleuel (62), die sich in Bezug auf eine vertikale mittlere Ebene, die durch die erste Verlängerungsachse (C) verläuft, auf einer bzw. der anderen Seite des ersten Abschnitts (50a) erstrecken, und
- ein zentrales Pleuel (64), das sich unter dem ersten Abschnitt (50a) befindet.

5. Verbindungsstruktur (50) nach einem der vorstehenden Ansprüche, wobei der zweite Abschnitt (50b) eine obere Plattform (79) zur Befestigung mindestens eines Fußes einer Gleichrichterschaufel (54) umfasst.

6. Verbindungsstruktur (50) nach einem der vorstehenden Ansprüche, wobei die Gleichrichterschaufel (54) eine variable Feststellposition aufweist, wobei die Struktur (50) einen Mechanismus zur Führung des Fußes der Schaufel (54) und/oder ein Betätigungssystem umfasst.

7. Verbindungsstruktur (50) nach einem der vorstehenden Ansprüche, wobei sich die vordere Ebene (P1) stromaufwärts oder rechtwinklig zu Angriffskanten (54a) der Schaufeln (54) befindet und die hintere Ebene (P2) sich stromabwärts der Abströmungskanten (54a) der Schaufeln (54) befindet.

8. Anordnung, die ein Turbotriebwerk (10) eines Flugzeugs und eine Verbindungsstruktur (50) nach einem der vorstehenden Ansprüche umfasst, wobei das Turbotriebwerk (10) konfiguriert ist, um mithilfe dieser Verbindungsstruktur (50) überhängend an einem Pylon (32) angebracht zu werden.

9. Anordnung nach dem vorstehenden Anspruch, wobei das Turbotriebwerk (10) eine Längsachse (A) aufweist und einen Gasgenerator (12) umfasst, der von stromaufwärts nach stromabwärts im Sinne der Gasströmung mindestens einen Kompressor (14, 16), eine ringförmige Brennkammer (18) und mindestens eine Turbine (20, 22) umfasst, wobei der Gasgenerator eine ringförmige Hauptströmungsader eines ersten Luftstroms definiert und der Gasgenerator (12) dazu vorgesehen ist, von einer sekundären ringförmigen Strömungsader eines zweiten Luftstroms umgeben zu sein, wobei der Gasgenerator (12) einen Propeller (52) antreibt und die Verbindungsstruktur (50) derart am Gasgenerator (12) befestigt ist, dass ihre Verlängerungsachse (C) sich auf einem in Bezug auf die Längsachse gemessenen Radius befindet, der zwischen dem Mindestradius (Rmin) und dem Höchstradius (Rmax) des Propellers (52) liegt.

10. Anordnung nach Anspruch 8 oder 9, wobei das Turbotriebwerk (10) eine ringförmige Reihe von Gleichrichterschaufeln (54) umfasst, die sich in der sekundären Ader befindet, wobei sich der zweite Abschnitt (50b) der Struktur (50) zwischen zwei benachbarten Schaufeln (54) dieser Schaufelreihe befindet oder eine der Schaufeln (54) dieser Schaufelreihe trägt.

11. Anordnung nach einem vorstehenden Anspruch, wobei sich die vordere Ebene (P1) stromaufwärts oder rechtwinklig zu Angriffskanten (54a) der Schaufeln (54) der Schaufelreihe befindet und/oder die hintere Ebene (P2) sich stromabwärts von Abströmungskanten (54a) der Schaufeln (54) der Schaufelreihe befindet.

12. Anordnung nach einem der Ansprüche 8 bis 10, wobei sie weiter einen Pylon (32) umfasst, der eine zweite Verlängerungsachse (B) aufweist und ein Vorderende (32a) zur Befestigung am ersten Abschnitt (50a) der Struktur (50) umfasst.

## Claims

1. A structure (50) for linking and supporting a turbine engine (10) to an aircraft pylon (32), the structure (50) having a first axis of elongation (C) intended to extend parallel to a second axis of elongation (B) of the pylon (32), the structure (50) comprising:
- a first axial segment (50a) for fastening to the pylon (32), this first segment (50a) comprising an upper end which defines a substantially horizontal plane (P3) of interface with the pylon (32), and a lower end carrying suspension connecting rods (62, 64) which are intended to be connected to the turbine engine (10) and which extend in a first substantially vertical plane, referred to as the rear plane (P2), and
- a second axial segment (50b) which is intended to extend in front of the pylon (32) and comprising at least one suspension member (66) which is intended to be connected to the turbine engine (10) and which extends in a second substantially vertical plane, referred to as the front plane (P1), this front plane being at an axial distance from the rear plane (P2).

2. The linking structure (50) according to claim 1, wherein said at least one suspension member (66) is located at a free front end of the second segment (50b).

3. The linking structure (50) according to claim 2, wherein said at least one suspension member (66) is a snout which comprises:
- a connecting rod (72) for fastening to the turbine engine (10), which extends in said front plane (P1), and
- a cylindrical body (74) which is engaged in a housing (76) of the free end of the second segment (50b) and which is able to pivot in this housing about an axis (D) parallel to said first axis of elongation (C).

4. The linking structure (50) according to one of the preceding claims, wherein the first segment (50a) carries three suspension connecting rods (62, 64) in said rear plane (P2), these three connecting rods comprising:
- two lateral connecting rods (62) extending respectively on either side of the first segment (50a), symmetrically with respect to a vertical median plane passing through said first axis of elongation (C), and
- a central connecting rod (64) located under the first segment (50a).

5. The linking structure (50) according to one of the preceding claims, wherein the second segment (50b) comprises an upper platform (79) for fastening at least one root of a rectifier vane (54).

6. The linking structure (50) according to one of the preceding claims, wherein, the rectifier vane (54) being of variable pitch, the structure (50) comprises a mechanism for guiding the root of the vane (54) and/or an actuation system.

7. The linking structure (50) according to one of the preceding claims, wherein said front plane (P1) is located upstream of or perpendicular to the leading edges (54a) of the vanes (54), and the rear plane (P2) is located downstream of the trailing edges (54b) of the vanes (54).

8. An assembly comprising an aircraft turbine engine (10) and a linking structure (50) according to one of the preceding claims, the turbine engine (10) being configured to be mounted in a cantilevered manner on a pylon (32) by means of this linking structure (50).

9. The assembly according to the preceding claim, wherein the turbine engine (10) has a longitudinal axis (A) and comprises a gas generator (12) comprising, from upstream to downstream, in the direction of flow of the gases, at least one compressor (14, 16), an annular combustion chamber (18) and at least one turbine (20, 22), the gas generator defining a main annular duct for the flow of a first air flow, and the gas generator (12) being intended to be surrounded by a secondary annular duct for a second air flow, the gas generator (12) driving a propeller (52) and the linking structure (50) being fastened to the gas generator (12) so that its axis of elongation (C) is located at a radius measured with respect to the longitudinal axis, which is between the minimum radius (Rmin) and the maximum radius (Rmax) of the propeller (52).

10. The assembly according to claim 8 or 9, wherein the turbine engine (10) comprises an annular row of rectifier vanes (54) which is located in the secondary duct, the second segment (50b) of the structure (50) being located between two adjacent vanes (54) of that row of vanes or carrying one of the vanes (54) of that row of vanes.

11. The assembly according to the preceding claim, wherein said front plane (P1) is located upstream of or perpendicular to leading edges (54a) of the vanes (54) of the row of vanes, and/or said rear plane (P2) is located downstream of trailing edges (54b) of the vanes (54) of the row of vanes.

12. The assembly according to one of claims 8 to 10, wherein it further comprises a pylon (32) having a second axis of elongation (B) and comprising a front end (32a) for fastening to the first segment (50a) of the structure (50).
